(19) Europäisches Patentamt
European Patent Office
Office européen des brevets

(11) **EP 2 100 367 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(21) Anmeldenummer: **06828679.8**

(22) Anmeldetag: **08.12.2006**

(51) Int Cl.:
***H02M 7/49*** *(2007.01)*

(86) Internationale Anmeldenummer:
**PCT/DE2006/002248**

(87) Internationale Veröffentlichungsnummer:
**WO 2008/067785 (12.06.2008 Gazette 2008/24)**

(54) **VORRICHTUNG ZUM UMRICHTEN EINES ELEKTRISCHEN STROMES**

DEVICE FOR CONVERTING AN ELECTRIC CURRENT

DISPOSITIF POUR TRANSFORMER UN COURANT ÉLECTRIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**16.09.2009 Patentblatt 2009/38**

(73) Patentinhaber: **Siemens Aktiengesellschaft**
**80333 München (DE)**

(72) Erfinder:
• **DOMMASCHK, Mike**
  **01945 Guteborn (DE)**
• **DORN, Jörg**
  **96155 Buttenheim (DE)**
• **EULER, Ingo**
  **91056 Erlangen (DE)**
• **LANG, Jörg**
  **95346 Stadtsteinach (DE)**
• **SÖRANGR, Dag**
  **91052 Erlangen (DE)**
• **TU, Quoc-Buu**
  **90574 Rosstal (DE)**
• **WÜRFLINGER, Klaus**
  **90419 Nürnberg (DE)**

(56) Entgegenhaltungen:
DE-A1- 2 245 680     DE-A1- 3 335 222
DE-A1- 4 341 868     DE-A1- 10 345 503

• DATABASE INSPEC [Online] THE INSTITUTION OF ELECTRICAL ENGINEERS, STEVENAGE, GB; 31. Dezember 2003 (2003-12-31), LESNICAR A ET AL: "An innovative modular multilevel converter topology suitable for a wide power range" XP002447365 Database accession no. 8117364 in der Anmeldung erwähnt
• MARQUARDT, LESNICAR, HILDINGER: "Modulares Stromrichterkonzept für Netzkupplungsanwendung bei hohen Spannungen" UNIV. BUNDESW. NEUBIBERG, [Online] 2002, Seiten 1-7, XP002447360 Bad Nauenheim [gefunden am 2007-08-20] in der Anmeldung erwähnt
• LESNICAR, MARQUARDT: "A new modular voltage source inverter topology" UNIV. BUNDESW. NEUBIBERG, 2003, XP002447361 EPE' 2003 Toulouse Frankreich in der Anmeldung erwähnt
• MARQUARDT, LESNICAR: "New Concept for High Voltage - Modular Multilevel Converter" UNIV. BUNDESW. NEUBIBERG, 2004, XP002447362 PESC 2004 Confernece in Aachen, Deutschland in der Anmeldung erwähnt

EP 2 100 367 B1

**Beschreibung**

Die Erfindung betrifft eine Vorrichtung zum Umrichten eines elektrischen Stromes mit wenigstens einem Phasenmodul, das einen Wechselspannungsanschluss und wenigstens einen Gleichspannungsanschluss aufweist, wobei zwischen jedem Gleichspannungsanschluss wenigstens eine Induktivität sowie und dem Wechselspannungsanschluss ein Phasenmodulzweig ausgebildet ist, und wobei jeder Phasenmodulzweig über eine Reihenschaltung aus Submodulen verfügt, die jeweils einen Energiespeicher und wenigstens einen Leistungshalbleiter aufweisen, mit Regelungsmitteln zum Regeln der Vorrichtung.

Eine solche Vorrichtung ist beispielsweise aus dem Beitrag von A. Lesnicar und R. Marquardt "An Innovative Modular Multilevel Converter Topology Suitable for a Wide Power Range", der auf der Powertech 2003 erschien, bereits bekannt. Dort ist ein Stromrichter offenbart, der für einen Anschluss an ein Wechselspannungsnetz vorgesehen ist. Der Stromrichter weist für jede Phase des mit ihm zu verbindenen Wechselspannungsnetzes ein Phasenmodul auf, wobei jedes Phasenmodul über einen Wechselspannungsanschluss sowie zwei Gleichspannungsanschlüsse verfügt. Zwischen jedem Gleichspannungsanschluss und dem Wechselspannungsanschluss erstrecken sich Phasenmodulzweige, so dass eine so genannte 6-Puls-Brückenschaltung bereitgestellt ist. Die Modulzweige bestehen aus einer Reihenschaltung von Submodulen, die jeweils aus zwei abschaltbaren Leistungshalbleitern bestehen, denen jeweils gegensinnige Freilaufdioden parallel geschaltet sind. Die abschaltbaren Leistungshalbleiter und die Freilaufdioden sind in Reihe geschaltet, wobei parallel zur besagten Reihenschaltung ein Kondensator vorgesehen ist. Die besagten Komponenten der Submodule sind so miteinander verschaltet, dass am zweipoligen Ausgang jedes Submoduls entweder die Kondensatorspannung oder die Spannung null abfällt.

Die Steuerung der abschaltbaren Leistungshalbleiter erfolgt mittels der so genannten Pulsweitenmodulation. Die Regelungsmittel zur Steuerung der Leistungshalbleiter weisen Messsensoren zum Erfassen von Strömen unter Gewinnung von Stromwerten auf. Die Stromwerte werden einer zentralen Steuerungseinheit zugeführt, die eine Eingangsschnittstelle und eine Ausgangsschnittstelle aufweist. Zwischen der Eingangsschnittstelle und der Ausgangsschnittstelle ist ein Modulator, also eine Softwareroutine, vorgesehen. Der Modulator weist unter anderem eine Auswähleinheit sowie einen Pulsweitengenerator auf. Der Pulsweitengenerator erzeugt die Steuersignale für die einzelnen Submodule. Die abschaltbaren Leistungshalbleiter werden durch die vom Pulsweitengenerator erzeugten Steuersignale von einer Durchgangsstellung, in der ein Stromfluss über die abschaltbaren Leistungshalbleiter ermöglicht ist, in eine Sperrstellung überführt, in der ein Stromfluss über die abschaltbaren Leistungshalbleiter unterbrochen ist. Dabei weist jedes Submodul ein Submodulsensor zum Erfassen einer am Kondensator abfallenden Spannung auf.

Weitere Beiträge zum Steuerverfahren für eine so genannte Multi-Level-Stromrichtertopologie sind von R. Marquardt, A. Lesnicar, J. Hildinger, "Modulares Stromrichterkonzept für Netzkupplungsanwendung bei hohen Spannungen", erschienen auf der ETG-Fachtagung in Bad Nauenheim, Deutschland 2002, von A. Lesnicar, R. Marquardt, "A new modular voltage source inverter topology", EPE' 03 Toulouse, Frankreich 2003 und von R. Marguardt, A. Lesnicar "New Concept for High Voltage - Modular Multilevel Converter", PESC 2004 Conference in Aachen, Deutschland, bekannt.

Aus der unter-Artikel (5463) EPÜ fallenden EP1927183 (DE 10 2005 045 090.3) ist ein Verfahren zur Steuerung eines mehrphasigen Stromrichters mit verteilten Energiespeichern offenbart. Die offenbarte Vorrichtung weist ebenfalls eine Multi-Level-Stromrichtertopologie mit Phasenmodulen auf, die über einen symmetrisch in der Mitte jedes Phasenmoduls angeordneten Wechselspannungsanschluss und zwei Gleichspannungsanschlüsse verfügen. Jedes Phasenmodul ist aus zwei Phasenmodulzweigen zusammengesetzt, die sich zwischen dem Wechselspannungsanschluss und einem der Gleichspannungsanschlüsse erstrecken. Jeder Phasenmodulzweig umfasst wiederum eine Reihenschaltung aus Submodulen, wobei jedes Submodul aus abschaltbaren Leistungshalbleitern und diesen antiparallel geschalteten Freilaufdioden besteht. Ferner verfügt jedes Submodul über einen unipolaren Kondensator. Zur Regelung der Leistungshalbleiter dienen Regelungsmittel, die auch zum Einstellen von Zweigströmen eingerichtet sind, welche zwischen den Phasenmodulen fließen. Durch die Steuerung der Zweigströme können beispielsweise Stromschwingungen aktiv gedämpft und Betriebspunkte mit kleineren Ausgangsfrequenzen vermieden werden. Darüber hinaus kann eine gleichmäßige Belastung aller abschaltbaren Halbleiterschalter sowie eine Symmetrierung von stark unsymmetrischen Spannungen herbeigeführt werden.

Die Submodule der Phasenmodule erzeugen jeweils diskrete Ausgangsspannungen, so dass bei ungleichen Spannungsverhältnissen zwischen den Phasenmodulen Kreisströme zwischen den einzelnen Phasenmodulen hervorgerufen werden können. Diese Kreisströme sind neben der Schaltfrequenz, mit der die Leistungshalbleiter geschaltet werden, von dem Verhältnis der angelegten Spannungen zu den Induktivitäten innerhalb des Strompfades abhängig. Bei niedrigen Schaltfrequenzen unterhalb von 200 Hz sind die Kreisströme bei kleinen Induktivitäten regelungstechnisch kaum beherrschbar und können nicht vermieden werden.

Die DE 43 41 868 A1 beschreibt einen Umrichter mit Phasenmodulen, die jeweils zwei Gleichspannungsanschlüsse sowie einen Wechselspannungsanschluss aufweisen. Zwischen dem Wechselspannungsanschluss und jedem Gleichspannungsanschluss erstreckt sich ein Stromventil oder Phasenmodulzweig, das aus einer Reihenschaltung von abschaltbaren Leistungshalbleitern besteht, wobei jedem abschaltbaren Leistungshalbleiter eine Freilaufdiode gegenseitig parallel geschaltet ist. Ferner weist jedes Phasenmodul eine Reaktanzspule auf.

Die DE 224 56 80 offenbart einen netzgeführten Umrichter, der drei parallel geschaltete Einzelumrichter aufweist, die über Verbindungsleitungen miteinander gekoppelt sind. In diesen Verbindungsleitungen sind Induktivitäten angeordnet. Ein zwischen den Einzelumrichtern fließender Strom wird als Kreisstrom bezeichnet.

Die DE 33 35 222 A1 beschreibt ein Verfahren zur Ansteuerung eines Umrichters.

Aufgabe der Erfindung ist es eine Vorrichtung der eingangs genannten Art bereitzustellen, mit der Kreisströme gezielt gesteuert und verringert werden können.

Diese Aufgabe wird erfindungsgemäß dadurch gelöst, dass die Induktivität so groß gewählt ist, dass mittels der Regelungsmittel eine Regelung von Kreisströmen ermöglicht ist, die bei ungleichen Spannungsverhältnissen zwischen den Phasenmodulen über die und zwischen den Phasenmodulen fließen. Erfindungsgemäß weist jedes Phasenmodul wenigstens eine Induktivität auf. Die Induktivitäten sind so eingerichtet, dass eine gezielte Regelung der Kreisströme durch die Regelungsmittel ermöglicht ist. Mit anderen Worten sind die Induktivitäten an die jeweils vorliegenden Bedingungen, wie der anliegenden Gleichspannung, der anliegenden Wechselspannung und dergleichen, angepasst. Die Regelung gibt gewünschte Kreisspannungssollwerte vor, die bei der Regelung des zugeordneten Phasenmodulzweiges als Sollwert, beispielsweise anderen Sollspannungen des betroffenen Phasenmodulzweiges, aufgeschaltet werden und so für einen gewünschten Kreisstrom sorgen. Dabei weist die Regelung vorteilhafterweise eine Stromregeleinheit und für jeden Phasenmodulzweig eine zugeordnete Ansteuereinheit auf. Die Stromregeleinheit ist nur über die Ansteuereinheit nicht aber direkt mit den Submodulen des jeweiligen Phasenmodulzweiges verbunden. Dabei erzeugt die Stromregeleinheit beispielsweise einen Zweigspannungssollwert, welcher der Ansteuereinheit zur Verfügung gestellt wird. Die Ansteuereinheit sorgt für Steuersignale, die den abschaltbaren Leistungshalbleitern der Submodule zugeführt werden, so dass an den Submodulen des zugeordneten Phasenmodulzweiges eine Gesamtspannung abfällt, die der Zweigsollspannung möglichst genau entspricht. Das Aufschalten der Kreisspannungssollwerte zu anderen Sollspannungen des jeweiligen Phasenmodulzweiges erfolgt durch die Stromregeleinheit, die die besagten Sollwerte linear, also durch Summen- und/oder Differenzbildung, miteinander kombiniert. Das Ergebnis dieser Linearkombination sind Zweigspannungssollwerte, die jeweils einem Phasenmodulzweig zugeordnet sind.

Da jeder Phasenmodulzweig eine gleiche Induktivität aufweist, ist für eine regelungstechnisch notwendige Symmetrie gesorgt.

Vorteilhafterweise ist jeder Phasenmodulzweig über eine Induktivität mit dem Wechselspannungsanschluss verbunden. Gemäß dieser zweckmäßigen Weiterentwicklung ist der Wechselspannungsanschluss zwischen zwei Induktivitäten angeordnet.

Gemäß einer diesbezüglich zweckmäßigen Weiterentwicklung sind die Induktivitäten des Phasenmoduls miteinander gekoppelt. Durch die Kopplung erhöht sich die Gesamtinduktivität, so dass die Einzelinduktivitäten in ihrer Dimensionierung, also Induktivität, entsprechend erniedrigt werden können. Auf diese Weise werden Kosten gespart. Mit anderen Worten können kleinere Drosseln oder Spulen in dem Phasenmodul eingesetzt werden. Die durch die Kopplung erzielte Gesamtindukitvität wirkt sich ferner nur auf die Kreisströme und allenfalls auf die Gleichstromanteile der Phasenmodulzweigströme aus. Die Induktivität für die wechselstromseitigen Phasenströme wird durch die Kopplung der Induktivitäten hingegen verringert.

Die Kopplung der Induktivitäten kann über Luft, über einen Eisenkern oder dergleichen erfolgen.

Weitere Vorteile und Ausgestaltungen sind Gegenstand der nachfolgenden Beschreibung von Ausführungsbeispielen der Erfindung mit Bezug auf die Figuren der Zeichnung, wobei gleiche Bezugszeichen auf gleich wirkende Bauteile verweisen und wobei

Figur 1     ein Ausführungsbeispiel einer erfindungsgemä- ßen Vorrichtung in einer schematischen Dar- stellung,

Figur 2     eine Ersatzbilddarstellung eines Submoduls ei- ner Vorrichtung gemäß Figur 1,

Figur 3     die Vorrichtung gemäß Figur 1 mit gekoppelten Induktivitäten,

Figur 4     eine vergrößerte Darstellung der Kopplung der Induktivitäten

Figur 5     die Struktur der Regelungsmittel der Vorrichtung gemäß Figur 1 zeigen und

Figur 6     das Aufschalten von Kreisspannungssollwerten zu anderen Sollwerten der Regelungsmittel ver- deutlicht.

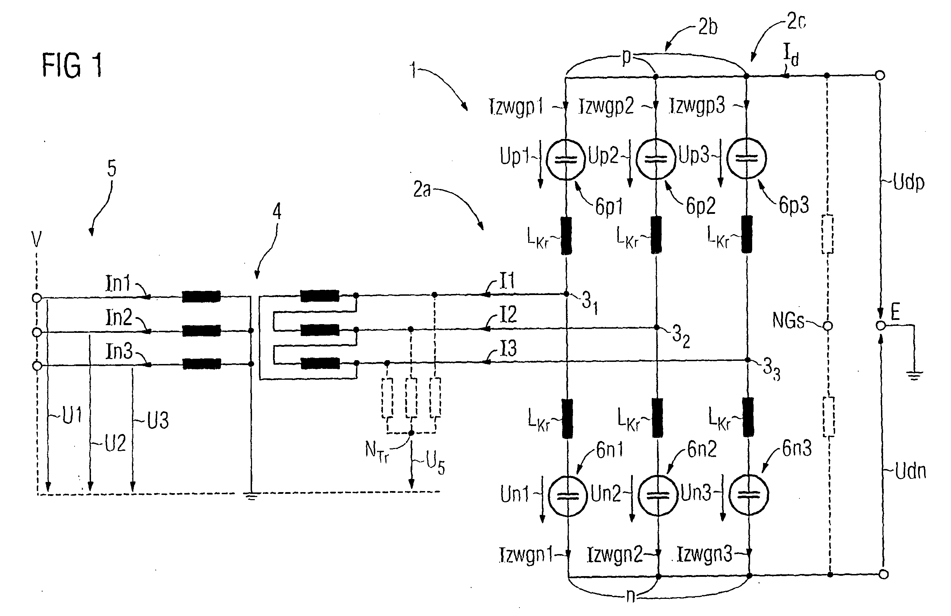

Figur 1 zeigt ein Ausführungsbeispiel der erfindungsgemäßen Vorrichtung 1, die aus drei Phasenmodulen 2a, 2b und 2c zusammengesetzt ist. Jedes Phasenmodul 2a, 2b und 2c ist mit einer positiven Gleichspannungsleitung p sowie mit einer negativen Gleichspannungsleitung n verbunden, so dass jedes Phasenmodul 2a,2b,2c zwei Gleichspannungsanschlüsse aufweist. Ferner ist für jedes Phasenmodul 2a, 2b und 2c jeweils ein Wechselspannungsanschluss $3_1$, $3_2$ und $3_3$

vorgesehen. Die Wechselspannungsanschlüsse $3_1$, $3_2$ und $3_3$ sind über einen Transformator 4 mit einem dreiphasigen Wechselspannungsnetz 5 verbunden. An den Phasen des Wechselspannungsnetzes 5 fallen die Phasenspannungen U1, U2 und U3 ab, wobei Netzströme In1, In2 und In3 fließen. Der wechselspannungsseitige Phasenstrom eines jeden Phasenmoduls wird mit I1, I2 und I3 bezeichnet. Der Gleichspannungsstrom ist $I_d$. Zwischen jedem der Wechselspannungsanschlüsse $3_1$, $3_2$ oder $3_3$ und der positiven Gleichspannungsleitung p erstrecken sich Phasenmodulzweige 6p1, 6p2 und 6p3. Zwischen jedem Wechselspannungsanschluss $3_1$, $3_2$, $3_3$ und der negativen Gleichspannungsleitung n sind die Phasenmodulzweige 6n1, 6n2 und 6n3 ausgebildet. Jeder Phasenmodulzweig 6p1, 6p2, 6p3, 6n1, 6n2 und 6n3 besteht aus einer Reihenschaltung aus in Figur 1 nicht ausführlich dargestellten Submodulen und einer Induktivität, die in Figur 1 mit $L_{Kr}$ bezeichnet ist.

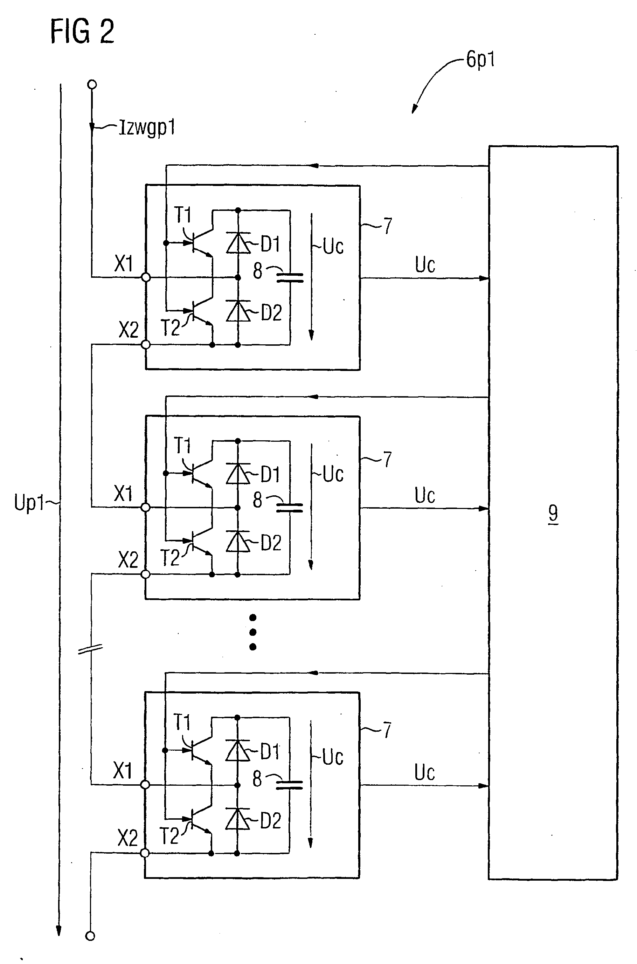

In Figur 2 ist die Reihenschaltung der Submodule 7 und insbesondere der Aufbau der Submodule durch ein elektrisches Ersatzschaltbild genauer dargestellt, wobei in Figur 2 lediglich der Phasenmodulzweig 6p1 herausgegriffen wurde. Die restlichen Phasenmodulzweige sind jedoch identisch aufgebaut. Es ist erkennbar, dass jedes Submodul 7 zwei in Reihe geschaltete abschaltbare Leistungshalbleiter T1 und T2 aufweist. Abschaltbare Leistungshalbleiter sind beispielsweise so genannte IGBTs, GTOs, IGCTs oder dergleichen. Diese sind dem Fachmann als solche bekannt, so dass eine ausführliche Darstellung an dieser Stelle entfallen kann. Jedem abschaltbaren Leistungshalbleiter T1, T2 ist eine Freilaufdiode D1, D2 antiparallel geschaltet. Parallel zur Reihenschaltung der abschaltbaren Leistungshalbleiter T1, T2 beziehungsweise der Freilaufdioden D1 und D2 ist ein Kondensator 8 als Energiespeicher geschaltet. Jeder Kondensator 8 ist unipolar aufgeladen. An den zweipoligen Anschlussklemmen X1 und X2 jedes Submoduls 7 können nunmehr zwei Spannungszustände erzeugt werden. Wird von einer Ansteuereinheit 9 beispielsweise ein Ansteuersignal erzeugt, mit dem der abschaltbare Leistungshalbleiter T2 in seine Durchgangsstellung überführt wird, in der ein Stromfluss über den Leistungshalbleiter T2 ermöglicht ist, fällt an den Klemmen X1, X2 des Submoduls 7 die Spannung null ab. Dabei befindet sich der abschaltbare Leistungshalbleiter T1 in seiner Sperrstellung, in der ein Stromfluss über den abschaltbaren Leistungshalbleiter T1 unterbrochen ist. Dies verhindert die Entladung des Kondensators 8. Wird hingegen der abschaltbare Leistungshalbleiter T1 in seine Durchgangsstellung, der abschaltbare Leistungshalbleiter T2 jedoch in seine Sperrstellung überführt, liegt an den Klemmen X1, X2 des Submoduls 7 die volle Kondensatorspannung Uc an.

Das Ausführungsbeispiel der erfindungsgemäßen Vorrichtung gemäß Figur 1 und 2 wird auch als so genannter Multi-Level-Stromrichter bezeichnet. Ein solcher Multi-Level-Stromrichter ist beispielsweise zum Antrieb elektrischer Maschinen, wie beispielsweise Motoren oder dergleichen, geeignet. Darüber hinaus eignet sich ein solcher Multilevelstromrichter auch für einen Einsatz im Bereich der Energieverteilung und - übertragung. So dient die erfindungsgemäße Vorrichtung beispielsweise als Kurzkupplung, die aus zwei gleichspannungsseitig miteinander verbundenen Stromrichtern besteht, wobei die Stromrichter jeweils mit einem Wechselspannungsnetz verbunden sind. Solche Kurzkupplungen werden zum Energieaustausch zwischen zwei Energieverteilungsnetzen eingesetzt, wobei die Energieverteilungsnetze beispielsweise eine unterschiedliche Frequenz, Phasenlage, Sternpunktbehandlung oder dergleichen aufweisen. Darüber hinaus kommen Anwendungen im Bereich der Blindleistungskompensation, als so genannte FACTS (Flexible AC Transmission Systems) in Betracht. Auch die Hochspannungsgleichstromübertragung über lange Strecken hinweg ist mit solchen Multilevelstromrichtern denkbar.

Die Induktivitäten $L_{kr}$ dienen zur Begrenzung der über das jeweilige Phasenmodul fließenden Ströme und somit zum Schutz der abschaltbaren Leistungshalbleiter T1, T2 und der Freilaufdioden D1 und D2 der Submodule 7 vor Überströmen. Die jeweilige Induktivität wird im Rahmen der Erfindung jedoch so groß gewählt, dass eine aktive Regelung der Kreisströme, die zwischen den Phasenmodulen fließen, ermöglicht ist. Im Rahmen der Erfindung sind daher Induktivitäten erforderlich, die größer sind als solche, die zum reinen Schutz der Leistungshalbleiter ausreichend sind. Darüber hinaus ist eine symmetrische Verteilung der Induktivitäten über die Phasenmodulzweige im Hinblick auf die Regelung von Vorteil.

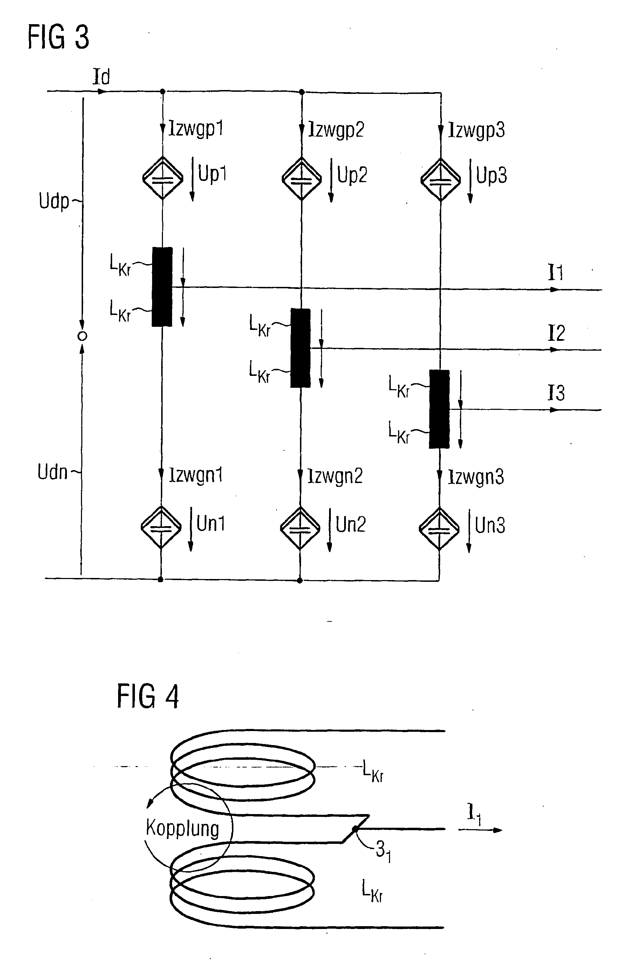

Figur 3 zeigt die Vorrichtung gemäß Figur 1, wobei jedoch die Induktivitäten $L_{kr}$ eines Phasenmoduls miteinander gekoppelt sind. Aufgrund dieser Kopplung können die Induktivitäten bei gleichen Nennspannungen und unter gleichen Einsatzbedingungen kleiner sein, als in dem Ausführungsbeispiel gemäß Figur 1. Mit anderen Worten bewirkt die Kopplung die Möglichkeit der Reduzierung der zum Bau benötigten Drosseln oder Spulen hinsichtlich ihrer Baugröße und sonstigen Ausgestaltung. Geht man von einem Kopplungsfaktor K für die magnetische Kopplung aus, ergibt sich für die wirksame Induktivität eines Phasenmodulzweiges in Kreisstromrichtung $L_K$:

$$L_K = L_L\ (1+K),$$

wobei $L_L$ der Induktivität der nicht miteinander gekoppelten Einzelinduktivitäten in Summe entspricht. Die Phasenmodulzweigströme umfassen neben den Kreisströmen, Gleichstromanteile und zwischen dem Wechselspannungsanschlüssen $3_1$, $3_2$, $3_3$ und dem angeschlossenen Wechselspannungsnetz fließende Phasenströme 11, 12 und 13. Eine erhöhte Induktivität ergibt sich nur für die Gleichstromanteile und die Kreisströme. Die Induktivität $L_{CONV}$ für die Phasenströme I1, I2 und I3 reduziert sich jedoch durch die Kopplung gemäß

$$L_{CONV} = L_L \ (1-K).$$

Auf diese Weise können Kreisströme reduziert und einer aktiven Regelung zugeführt werden. Die Kopplung kann über Luft, aber auch über einen Eisenkern oder dergleichen erfolgen. Bei Luftspulen lassen sich Kopplungsfaktoren von bis zu 20% herstellen. Neben der Bedämpfung der Kreisströme sorgen die gekoppelten Induktivitäten auch für eine verbesserte Aufteilung der Phasenströme in gleiche Anteile auf die Phasenmodulzweige des gleichen Phasenmoduls.

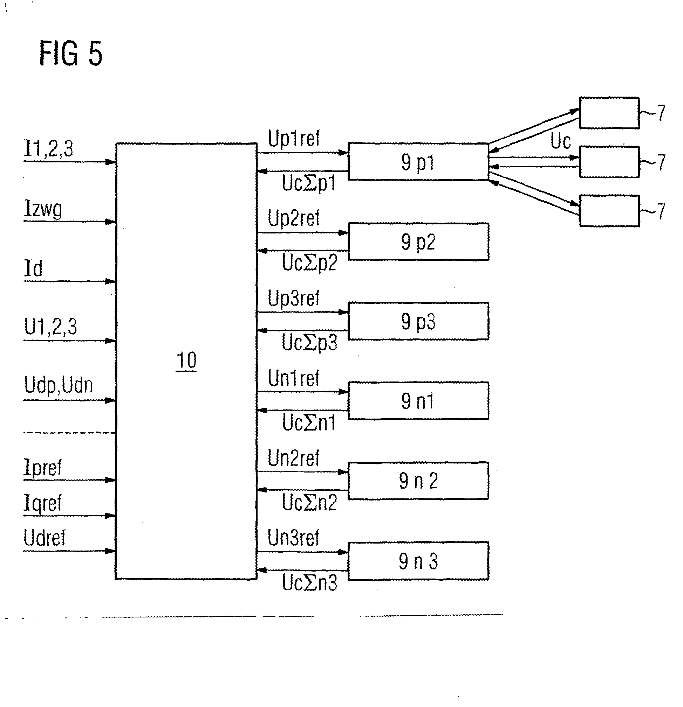

Figur 5 verdeutlicht die Struktur der Regelungsmittel. Die Regelungsmittel umfassen eine Stromregeleinheit 10 sowie Ansteuereinheiten 9p1, 9p2, 9p3 und 9n1 und 9n2 und 9n3. Jede der Ansteuereinheiten ist einem Phasenmodulzweig 6p1, 6p2, 6p3, 6n1, 6n2 beziehungsweise 6n3 zugeordnet. Die Ansteuereinheit 9p1 ist beispielsweise mit jedem Submodul 7 des Phasenmodulzweiges 6p1 verbunden und erzeugt die Steuersignale für die abschaltbaren Leistungshalbleiter T1, T2. In jedem Submodul 7 ist ein figürlich nicht dargestellter Submodulspannungssensor vorgesehen. Der Submodulspannungssensor dient zur Erfassung der an dem Kondensator 8 als Energiespeicher des Submoduls 7 abfallenden Kondensatorspannung unter Gewinnung eines Kondensatorspannungswertes Uc. Der Kondensatorspannungswert Uc wird der jeweiligen Ansteuereinheit, hier 9p1, zur Verfügung gestellt. Die Ansteuereinheit 9p1 erhält somit die Kondensatorspannungswerte sämtlicher Submodule 7 des ihr zugeordneten Phasenmodulzweiges 6p1 und summiert diese zum Erhalt eines Zweigenergieistwertes oder hier Zweigspannungsistwert UcΣp1, der ebenfalls dem Phasenmodulzweig 6p1 zugeordnet ist. Dieser Zweigspannungsistwert UcΣp1 wird der Stromregeleinheit 10 zugeführt.

Im Übrigen ist die Stromregeleinheit 10 mit verschiedenen figürlich nicht dargestellten Messsensoren verbunden. So dienen wechselspannungsseitig der Phasenmodule 2a, 2b, 2c angeordnete Stromwandler zum Erzeugen und Zuführen von Phasenstrommesswerten I1, I2, I3 und an jedem Phasenmodul angeordnete Stromwandler zum Erzeugen und Zuführen von Phasenmodulzweigströmen Izwg sowie ein im Gleichspannungskreis des Stromrichters angeordnete Stromwandler zum Bereitstellen von Gleichstrommesswerten Id. Spannungswandler des Wechselstromnetzes stellen Netzspannungsmesswerte U1, U2, U3 und Gleichspannungswandler positive Gleichspannungsmesswerte Udp und negative Gleichspannungsmesswerte Udn bereit, wobei die positiven Gleichspannungswerte Udp, einer zwischen dem positiven Gleichspannungsanschluss p und Erde abfallenden Gleichspannung und die negativen Gleichspannungswerte Udn, einer zwischen dem negativen Gleichspannungsanschluss und Erde abfallenden Spannung entsprechen.

Der Stromregeleinheit 10 werden ferner Sollwerte zugeführt. In dem in Figur 11 gezeigten Ausführungsbeispiel werden der Regelungseinheit 10 ein Wirkstromsollwert Ipref sowie ein Blindstromsollwert Iqref zugeführt. Ferner wird ein Gleichspannungssollwert Udref an den Eingang der Stromregeleinheit 10 gelegt. Statt eines Gleichspannungssollwertes Udref ist auch die Verwendung eines Gleichstomsollwertes Idref im Rahmen der Erfindung möglich.

Die Sollwerte Ipref, Iqref und Udref sowie die besagten Messwerte treten unter Einsatz verschiedener Regler in Wechselwirkung miteinander, wobei für jede Ansteuereinheit 9p1, 9p2, 9p3, 9n1, 9n2 und 9n3 ein Zweigspannungssollwert Up1ref, Up2ref, Up3ref, Un1ref, Un2ref, Un3ref erzeugt wird. Jede Ansteuereinheit 9 erzeugt Steuersignale für die ihr zugeordneten Submodule 7, so dass die an der Reihenschaltung der Submodule anfallende Spannung Up1, Up2, Up3, Un1, Un2, Un3 dem jeweiligen Zweigspannungssollwert Up1ref, Up2ref, Up3ref, Un1ref, Un2ref, Un3ref möglichst entspricht.

Die Stromregeleinheit 10 bildet aus ihren Eingangswerten geeignete Zweigspannungssollwerte Up1ref, Up2ref, Up3ref, Un1ref, Un2ref, Un3ref.

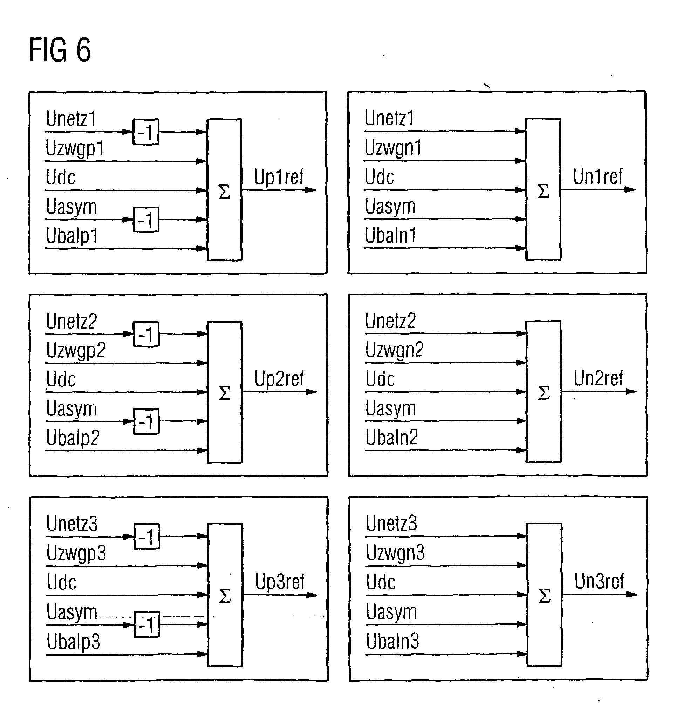

Figur 6 zeigt, dass beispielsweise der Zweigspannungssollwert Upref durch Linearkombination eines Netzphasenspannungssollwertes Unetz1, eines Zweigspannungszwischensollwertes Uzwgpl, eines Gleichspannungssollwertes Udc, eines Symmetrierungsspannungssollwertes Uasym und eines Balancierungsspannungssollwertes Ubalp1 berechnet wird. Dies erfolgt für jeden der Phasenmodulzweige 6p1, 6p2, 6p3, 6n1, 6n2, 6n3 unabhängig voneinander. Mit den Zweigspannungszwischensollwerten Uzwg können in Verbindung mit den eingestellten Zweiginduktivitäten die Kreisströme gezielt eingestellt werden. Auch die Balancierungsspannungssollwerte Ubal dienen zum Ausgleich von Unsymmetrien hinsichtlich der in den Phasenmodulzweigen gespeicherten 6p1, 6p2, 6p3, 6n1, 6n2, 6n3 Energien.

**Patentansprüche**

1. Vorrichtung (1) zum Umrichten eines elektrischen Stromes mit Phasenmodulen (2a, 2b, 2c), die jeweils einen Wechselspannungsanschluss ($3_1,3_2,3_3$) und wenigstens einen Gleichspannungsanschluss (p,n) aufweisen, wobei zwischen jedem Gleichspannungsanschluss (p,n) wenigstens eine Induktivität ($L_{kr}$) und jedem Wechselspannungsanschluss $3_1$, $3_2$, $3_3$) ein Phasenmodulzweig (6p1,6p2,6p3,6n1, 6n2,6n3) mit ausgebildet ist, und wobei jeder Phasenmodulzweig (6p1,6p2,6p3,6n1,6n2,6n3) über eine Reihenschaltung aus Submodulen (7) verfügt, die jeweils einen Energiespeicher (8) und wenigstens

einen Leistungshalbleiter ($T_1$,$T_2$) aufweisen, und mit Regelungsmitteln (10;9p1,9p2,9p3,9n1,9n2,9n3) zum Regeln der Vorrichtung, **dadurch gekennzeichnet, dass** die Induktivitäten (Lkr) so groß gewählt sind, dass mittels der Regelungsmittel (10;9p1,9p2,9p3,9n1, 9n2,9n3) eine Regelung von Kreisströmen ermöglicht ist, die bei ungleichen Spannungen zwischen den Phasenmodulen (2a,2b,2c) über die Phasenmodule (2a,2b,2c) und zwischen den Phasenmodulen (2a,2b,2c) fließen.

**2.** Vorrichtung (1) nach Anspruch 1, **dadurch gekennzeichnet, dass** jeder Phasenmodulzweig (6p1,6p2,6p3,6n1,6n2,6n3) über eine Induktivität ($L_{kr}$) mit dem Wechselspannungsanschluss ($3_1$,$3_2$, $3_3$) verbunden ist.

**3.** Vorrichtung (1) nach Anspruch 1 oder 2, **dadurch gekennzeichnet, dass** die Induktivitäten ($L_{kr}$) eines Phasenmoduls (2a,2b, 2c) miteinander gekoppelt sind.

**4.** Vorrichtung (1) nach Anspruch 3, **dadurch gekennzeichnet, dass** die Induktivitäten ($L_{kr}$) über Luft miteinander gekoppelt sind.

**5.** Vorrichtung (1) nach Anspruch 4, **dadurch gekennzeichnet, dass** die Induktivitäten ($L_{kr}$) über einen Eisenkern miteinander gekoppelt sind.

## Claims

**1.** Device (1) for converting an electrical current with phase modules (2a, 2b, 2c), which each have an AC voltage connection ($3_1$, $3_2$, $3_3$) and at least one DC voltage connection (p, n), a phase module branch (6p1, 6p2, 6p3, 6n1, 6n2, 6n3) with at least one inductance ($L_{kr}$) being formed between each DC voltage connection (p,n) and each AC voltage connection ($3_1$,$3_2$, $3_3$), and each phase module branch (6p1, 6p2, 6p3, 6n1, 6n2, 6n3) having a series circuit comprising submodules (7), which each have an energy store (8) and at least one power semiconductor ($T_1$, $T_2$) and with regulating means (10; 9p1, 9p2, 9p3, 9n1, 9n2, 9n3) for regulating the device, **characterized in that** the inductances ($L_{kr}$) are selected to be so high that a regulation of circulating currents is made possible by means of the regulating means (10; 9p1, 9p2, 9p3, 9n1, 9n2, 9n3), which circulating currents, given unequal voltages between the phase modules (2a, 2b, 2c), flow via the phase modules (2a, 2b, 2c) and between the phase modules (2a, 2b, 2c).

**2.** Device (1) according to Claim 1, **characterized in that** each phase module branch (6p1, 6p2, 6p3, 6n1, 6n2, 6n3) is connected to the AC voltage connection ($3_1$, $3_2$, $3_3$) via an inductance ($L_{kr}$).

**3.** Device (1) according to Claim 1 or 2, **characterized in that** the inductances ($L_{kr}$) of a phase module (2a, 2b, 2c) are coupled to one another.

**4.** Device (1) according to Claim 3, **characterized in that** the inductances ($L_{kr}$) are coupled to one another via air.

**5.** Device (1) according to Claim 4, **characterized in that** the inductances ($L_{kr}$) are coupled to one another via an iron core.

## Revendications

**1.** Dispositif ( 1 ) de transformation d'un courant électrique par des modules ( 2a, 2b, 2c ) de phase, qui ont respectivement une borne ( $3_1$, $3_2$, $3_3$ ) de tension alternative et au moins une borne (p, n) de tension continue, une branche ( 6p1, 6p2, 6p3, 6n1, 6n2, 6n3 ) de module de phase ayant au moins une inductance ( $L_{kr}$ ) étant formée entre chaque borne ( p, n ) de tension continue et chaque borne ( $3_1$, $3_2$, $3_3$ ) de tension alternative, et dans lequel chaque branche ( 6p1, 6p2, 6p3, 6n1, 6n2, 6n3 ) de module de phase dispose d'un circuit série composé de sous-modules ( 7 ), qui ont respectivement un accumulateur ( 8 ) d'énergie et au moins un semiconducteur ($T_1$, $T_2$) de puissance, et comprenant des moyens ( 10, 9p1, 9p2, 9p3, 9n1, 9n2, 9n3 ) de régulation pour réguler le dispositif, **caractérisé en ce que** les inductances ( $L_{kr}$ ) sont choisies si grandes qu'à l'aide des moyens ( 10, 9p1, 9p2, 9p3, 9n1, 9n2, 9n3 ) de régulation, il est rendu possible une régulation de courants circulaires, qui, si les tensions entre les modules ( 2a, 2b, 2c ) de phase sont inégales, passent par les modules ( 2a, 2b, 2c ) de phase et entre les modules ( 2a, 2b, 2c ) de phase.

**2.** Dispositif ( 1 ) suivant la revendication 1, **caractérisé en ce que** chaque branche ( 6p1, 6p2, 6p3, 6n1, 6n2, 6n3 ) de module de phase est reliée à la borne ( $3_1$, $3_2$, $3_3$ ) de tension alternative par une inductance ( $L_{kr}$ ).

**3.** Dispositif ( 1 ) suivant la revendication 1 ou 2, **caractérisé en ce que** les inductances ( $L_{kr}$ ) d'un module ( 2a, 2b, 2c ) de phase sont couplées entre elles.

4. Dispositif ( 1 ) suivant la revendication 3,
**caractérisé en ce que**
les inductances ( $L_{kr}$ ) sont couplées entre elles par de l'air.

5. Dispositif ( 1 ) suivant la revendication 4,
**caractérisé en ce que**
les inductances ( $L_{kr}$ ) sont couplées entre elles par un noyau de fer.

FIG 1

# FIG 2

FIG 3

FIG 4

# FIG 5

# FIG 6

Unetz1 → [-1] →
Uzwgp1 →
Udc → Σ → Up1ref
Uasym → [-1] →
Ubalp1 →

Unetz1 →
Uzwgn1 →
Udc → Σ → Un1ref
Uasym →
Ubaln1 →

Unetz2 → [-1] →
Uzwgp2 →
Udc → Σ → Up2ref
Uasym → [-1] →
Ubalp2 →

Unetz2 →
Uzwgn2 →
Udc → Σ → Un2ref
Uasym →
Ubaln2 →

Unetz3 → [-1] →
Uzwgp3 →
Udc → Σ → Up3ref
Uasym → [-1] →
Ubalp3 →

Unetz3 →
Uzwgn3 →
Udc → Σ → Un3ref
Uasym →
Ubaln3 →

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1927183 A
- DE 102005045090
- DE 4341868 A1
- DE 2245680
- DE 3335222 A1

**In der Beschreibung aufgeführte Nicht-Patentliteratur**

- **von A. Lesnicar ; R. Marquardt.** *An Innovative Modular Multilevel Converter Topology Suitable for a Wide Power Range,* 2003
- **von R. Marquardt ; A. Lesnicar ; J. Hildinger.** Modulares Stromrichterkonzept für Netzkupplungsanwendung bei hohen Spannungen. *ETG-Fachtagung in Bad Nauenheim,* 2002
- **von A. Lesnicar ; R. Marguardt.** A new modular voltage source inverter topology. *EPE' 03 Toulouse,* 2003
- **von R. Marguardt ; A. Lesnicar.** New Concept for High Voltage - Modular Multilevel Converter. *PESC 2004 Conference in Aachen,* 2004